# EUROPEAN PATENT APPLICATION

(11) **EP 0 594 443 A1**
(43) Date of publication of application: **27.04.1994**
(21) Application number: 93308410.5
(22) Date of filing: 21.10.1993
(51) Int. Cl.: B29C 33/20, B29C 45/68

(54) **Clamping apparatus and method for clamping an injection mold assembly**

(30) Priority: 22.10.1992 US 965067
(71) Applicant: Hettinga, Siebolt, Des Moines Iowa 50325 (US)
(72) Inventor: Hettinga, Siebolt, Des Moines Iowa 50325 (US); Ober, James Kelly, Des Moines Iowa 50325 (US)
(74) Representative: Singleton, Jeffrey

(57) **Abstract**

. A clamping apparatus and method for clamping an injection mold assembly in which clamp assemblies (12, 14) are located only along the parting line (22) between the first (16) and second (18) mold sections of an injection mold unit (10). The clamping assemblies (12, 14) both hold the first and second mold sections (16, 18) in their closed position during the injection molding of a plastic article and separate the first and second mold sections toward their open position after the injection molding of the plastic article. The clamp assemblies (12, 14) being located only at the parting line (20) and in physical contact with both the first and second mold sections (16, 18) eliminate the need for both heavy platens, tie bars and expensive clamping systems of the prior art while providing for uniform or varied clamping pressure where desired along the parting line.

## Description

This invention relates to a clamping apparatus and a method for clamping together the mold sections of an injection mold unit to form a sealed mold cavity and, more particularly, to a clamping apparatus and method for clamping an injection mold unit which is self-contained, uses only a small amount of energy, is compact in size, and is much less expensive than standard mold clamps to purchase and operate.

Injection molding machines generally include a two section mold unit wherein one of the mold sections is stationary and includes a sprue opening for the injection of mold material into the cavity formed when the two mold sections are clamped together. The other mold section is generally movable between an open position away from the stationary mold section and a closed position wherein the two mold sections are forced together in sealed contact engagement to form the mold cavity.

The mold material is injected under high pressure into the mold cavity, thus the two mold sections must be in a positive sealed engagement to prevent the escape of mold material from the mold cavity. Conventional injection molding machines typically apply a high pressure hydraulic force directed to the central portion of the movable mold section. This hydraulic force is applied by a ram, platen and tie bar arrangement in which the mold sections are held between two large surfaces and which is well known in the art. Because clamp tonnage is based on tons per square inch over the surface area of the part being molded, larger parts require larger platens, etc. and more force to hold the mold sections together. Using such large components and producing such large amounts of force can often be very expensive and require a large amount of space to allow this large equipment to operate. Additionally, very large parts such as bathtubs or freezer liners often would require such large equipment for forcing the mold sections together and such an excessive amount of force to hold the mold sections together that injection molding is no longer a cost effective method of molding such parts.

Furthermore, the clamping arrangements of the prior art have not been capable of declamping or separating the mold sections toward their open position.

The difficulties encountered in the prior art discussed hereinabove are substantially eliminated by the present invention.

The present invention provides a method for clamping the mold unit of an injection mold assembly wherein the need for very large forces and, in turn, very large clamps is eliminated.

The present invention may provide a method for clamping the mold unit of an injection mold assembly wherein localized clamping forces may be applied at different pressures.

The present invention provides a method for clamping the mold unit of an injection mold assembly wherein very large plastic articles may be produced at a competitive cost.

The present invention may provide a method for clamping the mold unit of an injection mold assembly wherein the clamping means may also be used to pull the mold unit apart.

The present invention may provide a method for clamping the mold unit of an injection mold assembly wherein the clamping means are compact and self-contained, making the injection mold assembly easy to move and store.

The present invention also provides a clamping apparatus for performing the method described herein.

These and other features of the invention will become apparent upon reference to the following specification, drawings, and claims.

By the present invention, it is proposed to overcome the difficulties encountered heretofore. To this end, a mold unit may include a first mold section which is stationary and a second mold section which is movable from an open position to a closed position is provided, the open position in which the movable second mold section is in a spaced relationship with respect to the stationary first mold section, the closed position in which the movable second mold section is in sealed engagement with the stationary first mold section thereby forming a mold cavity for receiving the plastic material from the injection molding machine during the injection molding of the plastic article. The first mold section and the second mold section are engaged in contact along a parting line. Clamping means and declamping means which are located only along the parting line and are in contact with both the first mold section and the second mold section are provided, the clamping means for holding the first and second mold sections in their dosed position during the injection molding of the plastic article, the declamping means for separating the first and second mold sections into their open position before and after the injection molding of the plastic article. Having the clamping and declamping means located only at the parting line and in contact with both the first and second mold sections allows for uniform or varied clamping as desired along the parting line and thereby eliminates the need for the heavy platens, tie bars and expensive clamping systems of the prior art.

In the drawings there is shown a preferred embodiment in which:
Fig. 1 is a perspective view of the mold unit, the mold frame, and the clamping structures;
Fig. 2 is a side elevational view in cross section of the mold frame, the clamping structures, and mold sections shown in the open position;
Fig. 3 is a side elevational view in cross section of the mold frame, clamping structures, and mold sections shown in the closed position;

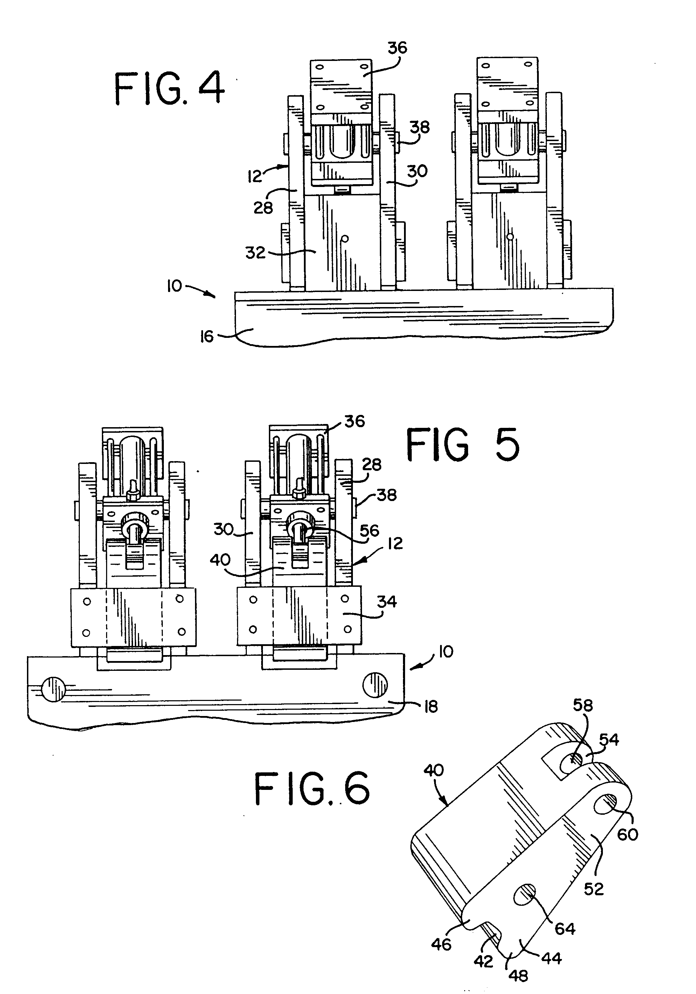

Fig. 4 is a rear elevational view of two clamping structures attached to the first mold section;
Fig. 5 is a front elevational view of two clamping structures releasably engaged to the second mold section; and
Fig. 6 is a perspective view of the pressure arm.

In the Figures, a clamping apparatus and a method for clamping an injection mold assembly 10 is shown, the injection mold assembly 10 which is equipped with clamp assemblies 12 and 14 which hold the injection mold assembly 10 in a clamped position during the injection process and declamp the injection mold assembly 10 after the injection process.

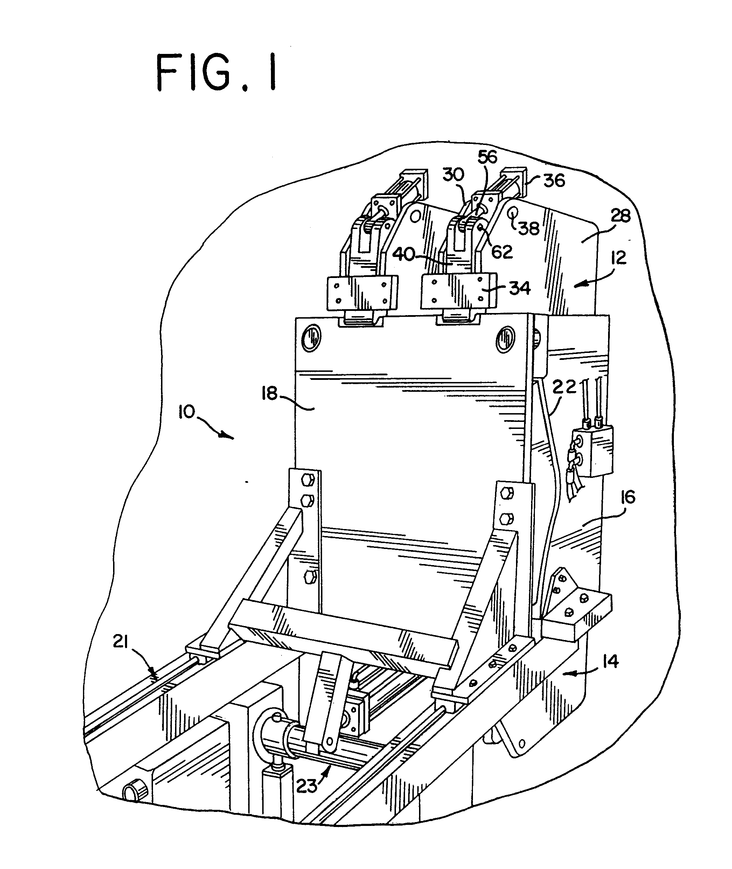

There is shown in Fig. 1 a preferred embodiment of the plastic injection mold assembly 10 having a first mold section 16 which is stationary and a second mold section 18 which is movable from an open position to a closed position via a track system 21 and a hydraulic traversing system 23, the open position in which the movable second mold section 18 is in a spaced relationship with respect to the stationary first mold section 16, the closed position in which the movable second mold section 18 is in sealed engagement with the stationary first mold section 16 thereby forming a mold cavity 20 for receiving plastic material during the injection molding of the plastic article. When in their closed positions, the first mold section 16 and the second mold section 18 are engaged in contact along a parting line 22 which transcends the outer perimeter of the plastic injection mold assembly 10.

Means for clamping and declamping the plastic injection mold assembly 10 are shown as clamp assemblies 12 and 14 located along the parting line 22 and in contact with both the first mold section 16 and the second mold section 18. The clamp assemblies 12 and 14 are shown on the top and bottom of the plastic injection mold assembly 10 respectively, but it is to be understood that the position along the parting line 22forthe clamp assemblies 12 and 14 can be varied depending upon where the clamping pressure is desired. Likewise, it should be noted that while identical upper and lower clamp assemblies 12 and 14 respectively are shqwn adjacent to one another in the preferred embodiment, the number and positions of the clamp assemblies 12 and 14 can be varied. Accordingly, only the top clamp assembly 12 is numbered in the figures and will be described herein since the other clamp assembly 14 is identical in structure and function. The clamp assemblies 12 and 14 provide means for both clamping and declamping as the clamp assemblies 12 and 14 operate to hold the first mold section 16 and the second mold section 18 in their closed position during the injection molding of the plastic material as well as to declamp the first mold section 16 and the second mold section 18 towards their open position after the injection molding of the plastic article.

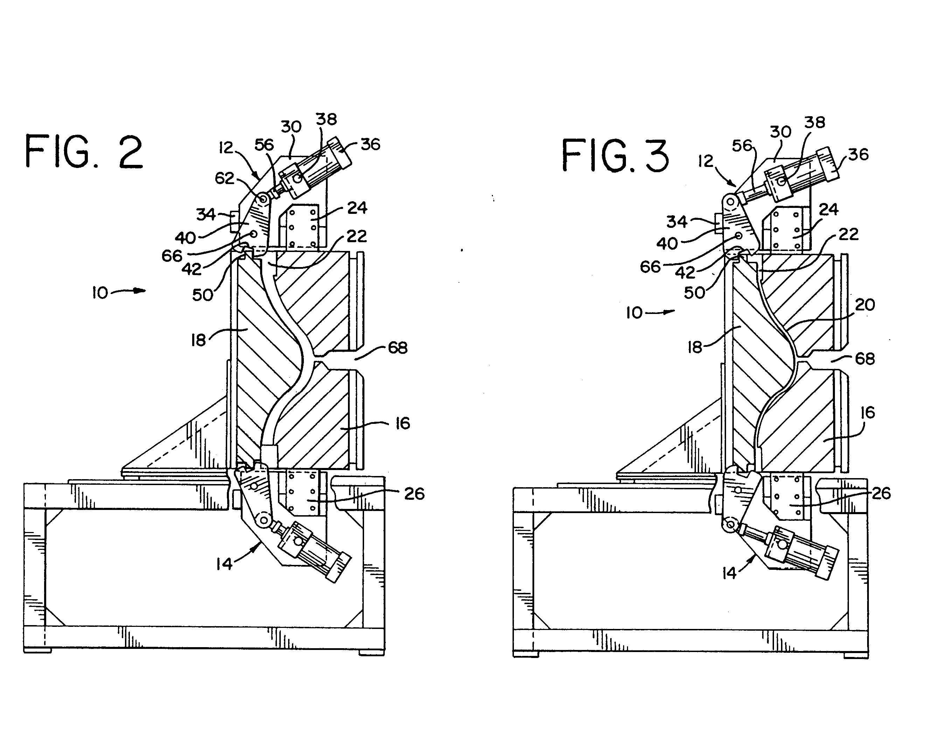

It is important that the clamp assemblies 12 and 14 are each in contact with both the first mold section 16 and the second mold section 18 and are only located along the parting line 22 of the mold sections 16 and 18. The clamp assemblies 12 and 14 thus provide an over-center clamping pressure which is capable of moving the second mold section 18 between its clamped (See Fig. 3) and declamped (See Fig. 2) positions, while further being capable of aligning the first and second mold sections 16 and 18 with respect to one another and transferring clamping and declamping forces between the first and second mold sections 16 and 18. The clamp assemblies 12 and 14 thus eliminate the need for the heavy platens and tie bars of the prior art while making the construction of the plastic injection mold assembly 10 much less complex.

In the preferred embodiment, the clamp assemblies 12 and 14 are attached via brackets 24 and 26 to the top and bottom of the first mold section 16 respectively. Each of the clamp assemblies 12 and 14 comprise parallel side plates 28 and 30, a back plate 32 and a front plate 34, all of which house a linear actuator shown as a hydraulic piston 36 that is attached between side plates 28 and 30 by a pin 38 which passes through the hydraulic piston 36 and the side plates 28 and 30 respectively. A pressure arm 40 is provided comprised of a tapered metal block which has a channel 42 running the transverse width of the larger end 44 of the pressure arm 40. On either side of the channel 42 are tabs 46 and 48 for alternative engagement with a raised flange 50 on the second mold section 18. The small end 52 of the pressure arm 40 includes a notch 54 to accommodate a shaft 56 of the hydraulic piston 36. The pressure arm 40 further includes two apertures 58 and 60 forming a passageway through its lateral dimension for accommodating pin 62 which connects the shaft 56 of the hydraulic piston 36 into pivotal engagement with the pressure arm 40. A central bore 64 is also included in the pressure arm 40 for receiving a pin 66 which pivotally attached the pressure arm 40 to the side plates 28 and 30 of the clamp assemblies 12 and 14. The pin 66 acts as a fulcrum to transfer upward and downward pressure on the small end 52 of the pressure arm to an antipodal pressure on the larger end 44 of the pressure arm 40.

The raised flange 50 on the second mold section 18 fits into mated engagement with the channel 42 of the pressure arm 40. In the preferred embodiment, the hydraulic piston 36 is of a high speed low torque type which is used to move the raised flange 50 of the second mold section 18 into and out of engagement with the appropriate tabs 46 and 48 of the pressure arm 40. When the hydraulic piston 36 forces the raised flange 50 of the second mold section 18 into engagement with the channel 42 of the pressure arm 40, pressure from the shaft 56 of the hydraulic piston 36 against the smaller end 52 of the pressure arm 40 pivots the larger end 44 of the pressure arm 40 toward the first mold section 16 and the tab 46 of the pressure arm 40 forces the second mold section 18 into sealed engagement with the first mold section 16. The closer the pin 66 is to the larger end 44 of the pressure arm 40, the greater the force of the pressure arm 40 is multiplied onto the second mold section 18.

After the mold sections 16 and 18 have been clamped together, an injection nozzle (not shown) is brought into engagement with an injection nozzle inlet 68 on the first mold section 16 and the mold cavity 20 is filled with a plastic injection mold material (not shown). Afterthe plastic article (not shown) has hardened, the hydraulic piston shaft 56 is withdrawn which pulls the smaller end 52 of the pressure arm 40 towards the hydraulic piston 36. The pressure arm 40 pivots and the tab 48 forces the raised flange 50 of the second mold section 18 and, in turn, the second mold section 18 away from the first mold section 16. The second mold section 18 may then be moved completely away from the first mold section 16 and the hardened plastic article may then be removed.

The pressure arm 40 is thus pivotable from a clamped orientation in which the pressure arm 40 forces the first mold section 16 and the second mold section 18 into their closed position to a declamped orientation in which the pressure arm 40 forces the first mold section 16 and the second mold section 18 to separate towards their open position. In general, the pressure arm 40 may be in contact with either one of the first and second mold sections 16 and 18 respectively and the linear actuator 36 would then be in contact with the other of the first and second mold sections 16 and 18 respectively.

The method for injection molding the plastic article thus comprises the following steps. The injection mold assembly 10 is provided, including the first mold section 16 which is stationary and the second mold section 18 which is movable from an open position to a closed position. When the first and second mold sections 16 and 18 respectively are in their open position, the movable second mold section 18 is in a spaced relationship with respect to the stationary first mold section 16. When the first and second mold sections 16 and 18 respectively are in their closed position, the movable mold section 18 is in sealed engagement with the stationary first mold section 16, thereby forming the mold cavity 20 for receiving the plastic material during the injection molding of the plastic article. The first mold section 16 and the second mold section 18, when in their closed position, are engaged in contact along the parting line 22. The clamp assemblies 12 and 14 are located only along the parting line 22 and are in contact with both the first mold section 16 and the second mold section 18 and are for holding the first and second mold sections 16 and 18 respectively in their closed position. The clamp assemblies 12 and 14 are also provided for declamping or separating the first and second mold sections 16 and 18 respectively towards their open position after the injection molding of the plastic article.

Accordingly, the clamp assemblies 12 and 14 are first actuated to move the first and second mold sections 16 and 18 respectively into their closed position. Plastic material is then injected from an injection molding machine into the mold cavity 20 while the clamp assemblies 12 and 14 maintain the first and second mold sections 16 and 18 respectively in their closed position. The plastic material is then allowed to at least partially harden after which the clamp assemblies 12 and 14 are actuated to declamp or move the first and second mold sections 16 and 18 respectively towards their open position. Finally, the resultant plastic article is removed from the plastic injection mold assembly 10.

As stated before, the number and position of clamp assemblies may be varied depending on the amount and location of clamping forces which are desired for a particular job resulting in less energy and equipment required. The clamp assemblies 12 and 14 thus provide over-center uniform or varied clamping along the parting line 22 around the injection mold assembly 10.

An electronic control system may be used for actuating the clamp assemblies 12 and 14 into clamping and declamping and for varying amounts of pressure at multiple points along the parting line 22 around the injection mold assembly 10.

The foregoing description and drawings merely explain and illustrate the invention and the invention is not limited thereto, except insofar as the claims are so limited, as those skilled in the art who have the disclosure before them will be able to make modifications and variations therein without departing from the scope of the invention. For example, while the clamp assemblies 12 and 14 of the preferred embodiment are shown on the outside of the injection mold assembly 10, it is anticipated that similar clamp assemblies could be located on the inside of the injection mold assembly 10.

## Claims

1. An apparatus for injection molding a plastic article comprising:
(a) an injection mold unit including a first mold section which is stationary and a second mold section which is movable from an open position to a closed position, said open position in which said movable second mold section is in a spaced relationship with respect to said stationary first mold section, said closed position in which said movable second mold section is in sealed engagement with said stationary first mold section thereby forming a mold cavity for receiving plastic material during the injection molding of said plastic article, said first mold section and said second mold section engaged in contact along a parting line;
(b) clamping means located only along said parting line and in contact with both of said first mold section and said second mold section, said clamping means for holding said first and second mold sections in said closed position during the injection molding of said plastic article; and
(c) declamping means located only along said parting line and in contact with both of said first mold section and said second mold section, said declamping means for separating said first and second mold sections toward said open position after the injection molding of said plastic article.

2. The apparatus, according to Claim 1, in which said clamping means and said declamping means are located in at least one position along said parting line between said first and second mold sections.

3. The apparatus, according to Claim 1, in which said clamping means and said declamping means are located in several positions along said parting line between said first and second mold sections.

4. The apparatus, according to any of Claims 1-3, in which said clamping means and said declamping means are in the same structural assembly.

5. The apparatus, according to any of Claims 1-4, in which said clamping means and said declamping means comprise a clamp assembly operably attached to both said first and second mold sections, said clamp assembly capable of moving said second mold section between clamped and declamped positions, said clamp assembly further capable of aligning said first and second mold sections and transferring clamping and declamping forces between said first and second mold sections.

6. The apparatus, according to Claim 5, in which said clamping assembly includes a pressure arm, said pressure arm which is pivotable from a clamped orientation in which said pressure arm forces said first and second mold sections into said closed position to a declamped orientation in which said pressure arm forces said first and second mold sections to separate towards said open position.

7. The apparatus, according to Claim 6, in which said pressure arm is pivoted between said clamped and said declamped orientations by a linear actuator.

8. The apparatus, according to Claim 7, in which said pressure arm is in contact with one of said first and second mold sections and said linear actuator is in contact with the other of said first and second mold sections.

9. The apparatus, according to Claim 7 or 8, in which said linear actuator is attached to one of said first and second mold sections by parallel side plates, said linear actuator located between and connected to said parallel side plates.

10. The apparatus, according to any of Claims 6-9, in which said pressure arm comprises a tapered metal block having a channel which corresponds in size and shape for mated alignment with a raised flange on one of said first and second mold sections.

11. A method for injection molding a plastic article comprising the steps of:
(a) providing an injection mold unit including a first mold section which is stationary and a second mold section which is movable from an open position to a closed position, said open position in which said movable second mold section is in a spaced relationship with respect to said stationary first mold section, said closed position in which said movable second mold section is in sealed engagement with said stationary first mold section, thereby forming a mold cavity for receiving plastic material during the injection molding of said plastic article, said first mold section and said second mold section engaged in contact along a parting line;
(b) providing clamping means located only along said parting line and in contact with both of said first mold section and said second mold section, said clamping means for holding said first and second mold sections in said closed position during the injection molding of said plastic article;
(c) providing declamping means located only along said parting line and in contact with both of said first mold section and said second mold section, said declamping means for separating said first and second mold sections toward said open position after the injection molding of said plastic article;
(d) actuating said clamping means to move said first and second mold sections into said closed position;
(e) injecting said plastic material into said mold cavity, said clamping means maintaining said first and second mold sections in said closed position;
(f) allowing said plastic material to at least partially harden;
(g) actuating said declamping means to separate said first and second mold sections toward said open position; and
(h) removing the resultant plastic article from said mold unit.

12. The method, according to Claim 11, further comprising the step of actuating said clamping means at multiple points along said parting line around said injection mold unit.

13. The method, according to Claim 12, further comprising the step of applying varying amounts of pressure to said multiple points along said parting line around said injection mold unit.
